# FASCICULE DE BREVET EUROPEEN

(11) **EP 2 197 739 B1**
(45) Date de publication et mention de la délivrance du brevet: **25.05.2011**
(21) Numéro de dépôt: 08804876.4
(22) Date de dépôt: 29.09.2008
(51) Int. Cl.: B64C 1/12, B64C 1/06

(54) **STRUCTURE DE FUSELAGE POUR FUSELAGE D'AERONEF EN MATERIAU COMPOSITE ET AERONEF EQUIPE D'UNE TELLE STRUCTURE DE FUSELAGE**
FLUGZEUGRUMPFSTRUKTUR, AUS VERBUNDMATERIAL HERGESTELLTER RUMPF UND MIT EINER SOLCHEN RUMPFSTRUKTUR AUSGERÜSTETES FLUGZEUG
FUSELAGE STRUCTURE FOR AIRCRAFT FUSELAGE MADE OF COMPOSITE MATERIAL AND AIRCRAFT EQUIPPED WITH SUCH FUSELAGE STRUCTURE

(30) Priorité: 08.10.2007 FR 0758132
(43) Date de publication de la demande: 23.06.2010
(73) Titulaire: AIRBUS OPERATIONS, 31060 Toulouse (FR)
(72) Inventeur: Gallant, Guillaume, F-31480 Lareole (FR); GIUSEPPIN, Laurent, F-82700 Finhan (FR); AGUERA, Damien, F-31400 Toulouse (FR)
(74) Mandataire: Ilgart, Jean-Christophe
(86) Numéro de dépôt international: PCT/EP2008/063018
(87) Numéro de publication internationale: WO 2009/047158

(56) Documents cités:
- EP-A- 0 048 191
- WO-A-02/083389

## Description

### DOMAINE TECHNIQUE

La présente invention se rapporte d'une façon générale au domaine des structures de fuselage pour fuselage d'aéronef en matériau composite.

L'invention concerne également un aéronef comprenant une telle structure de fuselage.

### ÉTAT DE LA TECHNIQUE ANTÉRIEURE

Classiquement, un fuselage d'aéronef comprend des panneaux montés et fixés autour d'une structure interne de manière à former, une fois assemblés, un revêtement extérieur aérodynamique. La structure interne est composée notamment de cadres de structure régulièrement répartis sur toute la longueur du fuselage et disposés de manière transversale à l'axe longitudinal du fuselage. Les cadres de structure ont une forme sensiblement circulaire, par exemple annulaire ou ovale, ou présentant deux ou trois lobes, ou encore toute autre forme du même type. La structure interne comprend également des lisses disposées suivant l'axe longitudinal du fuselage.

La structure interne du fuselage a pour but de procurer la résistance mécanique nécessaire au fuselage. Ainsi les cadres assurent le raidissement circonférentiel du fuselage, c'est-à-dire suivant la périphérie du fuselage, et les lisses assurent le raidissement longitudinal.

Habituellement, les éléments du fuselage et de sa structure (panneaux, cadres, lisses) sont réalisés en matériau métallique. Cela permet d'obtenir une bonne rigidité mécanique et autorise par ailleurs la formation d'un réseau électrique pour la mise à la masse des systèmes électriques de l'aéronef. Ainsi, le retour des courants fonctionnel et de défaut est assuré par les éléments métalliques de la structure.

Le développement actuel dans le domaine aéronautique de l'utilisation des matériaux composites comprenant un mélange de fibres et de résine permet d'obtenir un gain de masse important tout en préservant ou améliorant les caractéristiques mécaniques des éléments de structure de fuselage. Par exemple, la demande internationale W02007/071879, déposée au nom de la demanderesse, décrit un fuselage comprenant un revêtement extérieur en matériau composite fixé sur une structure interne métallique. Pour optimiser le gain de masse, les panneaux de revêtement extérieur, les cadres de structure et les lisses peuvent alors être réalisés en matériau composite et non plus en matériau métallique. Des modules de fixation, comme par exemple des clips, permettant l'assemblage des différents éléments entre eux peuvent également être réalisés en matériau composite.

La demande internationale WO-2002/083389 décrit une structure de fuselage comprenant au moins un cadre de structure réalisé dans un premier matériau, au moins un panneau de revêtement extérieur en matériau composite, et une pluralité de modules de fixation répartis le long de la circonférence dudit cadre de structure, lesdits modules de fixation permettant la fixation dudit panneau sur ledit cadre. Cependant, ce document ne décrit pas la mise à la masse des systèmes électriques au moyen d'éléments de structure ou de fixation.

Cependant, il est connu que les matériaux composites présentent une faible conductivité électrique. Les éléments de structure de fuselage en matériau composite ne peuvent en particulier plus former de ligne de retour de courant. L'utilisation de matériau composite pour les éléments de structure de fuselage nécessite alors d'ajouter une ligne de retour spécifique. Ainsi le gain de masse réalisé par l'utilisation de matériau composite est amputé par l'ajout de moyens dédiés au retour du courant. Le gain de masse concernant l'ensemble des éléments de structure du fuselage n'est alors plus substantiel.

Au vu de ce qui précède, les réalisations de l'art antérieur ne permettent pas d'obtenir un compromis satisfaisant entre l'économie de masse, la rigidité mécanique nécessaire du fuselage et la mise à la masse des systèmes électriques.

### EXPOSÉ DE L'INVENTION

L'invention a donc pour but de proposer une structure de fuselage pour fuselage d'aéronef en matériau composite remédiant aux inconvénients mentionnés ci-dessus relatifs aux réalisations de l'art antérieur, et également de présenter un aéronef comprenant une telle structure de fuselage.

Pour ce faire, l'invention a pour objet une structure de fuselage pour fuselage d'aéronef en matériau composite comprenant :
- au moins un cadre de structure réalisé dans un premier matériau,
- au moins un panneau de revêtement extérieur en matériau composite,
- une pluralité de modules de fixation répartis le long de la circonférence dudit cadre de structure, lesdits modules de fixation permettant la fixation dudit panneau sur ledit cadre.

Selon l'invention, lesdits modules de fixation sont réalisés dans un second matériau présentant une conductivité électrique sensiblement supérieure à celles dudit matériau composite et du premier matériau, lesdits modules de fixation étant montés en contact les uns aux autres de sorte à être reliés en série.

Ainsi, la pluralité de modules de fixation permet l'assemblage du/des panneau (x) de revêtement extérieur au/aux cadre(s) de structure tout en étant capable d'assurer la fonction supplémentaire de retour de courant pour les systèmes électriques. L'invention entraîne une diminution du nombre d'éléments de structure, du fait qu'il n'y a pas d'éléments spécifiquement dédiés à la ligne de retour réalisée grâce aux modules de fixation précités. Cela permet alors d'optimiser la masse totale de la structure de fuselage. En d'autres termes, le principe de l'invention est original et se distingue de l'art antérieur dans le sens où les modules de fixation assurent à la fois une fonction d'assemblage et une fonction électrique, ce qui permet d'éviter d'avoir recours à des éléments spécifiquement dédiés au retour de courant.

Avantageusement, le second matériau est un matériau métallique. En effet, les métaux présentent des conductivités électriques importantes, propices à la réalisation de la ligne de retour. Ainsi, dans le cas où les cadres de structure, en plus des panneaux, sont réalisés par exemple en matériau composite comprenant un mélange de fibres et de résine, les composites étant habituellement de mauvais conducteurs électriques, le retour de courant est assuré par les modules de fixation. Le gain de masse est alors important.

Avantageusement, le second matériau est un matériau métallique auquel est adjointe une couche de fibres. Ainsi ce type de matériau permet d'assurer le retour de courant par sa conductivité électrique importante tout en présentant une résistance aux contraintes mécaniques élevée du fait de la présence de fibres de renfort.

Dans un mode de réalisation de l'invention, les modules de fixation comprennent chacun une partie principale sensiblement plane s'étendant suivant la direction circonférentielle du fuselage, une partie secondaire située sur un bord circonférentiel extérieur de la partie principale et s'étendant de manière sensiblement perpendiculaire à la partie principale et au moins une partie de jonction située sur un bord latéral de la partie principale et s'étendant suivant la direction circonférentielle du fuselage de manière à relier en série ladite pluralité de modules de fixation deux à deux.

Ainsi les parties principale et secondaire permettent l'assemblage des panneaux et des cadres de structure, et la partie de jonction permet de réaliser un contact électrique entre les modules de fixation de manière à permettre la circulation du courant de défaut et du courant fonctionnel.

Avantageusement, une zone de la partie de jonction de chaque module de fixation est une zone de déformation privilégiée. Cette zone est apte à être déformée dans le cas d'un déplacement relatif dans le sens circonférentiel entre modules de fixation. Ce déplacement relatif apparaît lors de variations importantes de température. Les modules de fixation étant réalisés dans un matériau différent de ceux des panneaux et des cadres, les coefficients de dilatation sont donc différents. Pour éviter que la dilatation différentielle entre modules de fixation et panneaux et cadres n'engendre un déplacement relatif et donc des contraintes mécaniques, une zone de déformation privilégiée est donc prévue. Cette zone se déforme alors de manière à éviter toute contrainte mécanique qui viendrait fragiliser les éléments de la structure de fuselage.

Dans un mode de réalisation de l'invention, le revêtement extérieur est fixé à au moins une lisse disposée suivant la direction longitudinale du fuselage. Une zone d'au moins un bord latéral de la partie principale de chaque module de fixation présente une forme adaptée à laisser passer ladite lisse.

Avantageusement, au moins une zone du bord circonférentiel extérieur de la partie principale de chaque module de fixation présente une forme adaptée à laisser passer ladite lisse. Plusieurs espaces de passage peuvent ainsi être prévus pour chaque module de fixation, selon la longueur circonférentielle du module de fixation.

Dans un mode de réalisation de l'invention, chaque module de fixation comprend au moins une deuxième partie secondaire s'étendant de manière sensiblement perpendiculaire à la partie principale et disposée de manière à être sensiblement parallèle à une surface en regard de ladite lisse. Une deuxième partie secondaire est reliée à un bord latéral de la partie principale. Ainsi les modules de fixation permettent d'assembler les lisses aux panneaux et aux cadres de structure.

L'invention concerne également un aéronef comprenant une structure de fuselage selon l'une quelconque des revendications précédentes.

D'autres avantages et caractéristiques de l'invention apparaîtront dans la description détaillée non limitative ci-dessous.

### BRÈVE DESCRIPTION DES DESSINS

On décrira à présent, à titre d'exemples non limitatifs, des modes de réalisation préférés de l'invention, en se référant aux dessins annexés, dans lesquels :
La figure 1 est une vue en perspective représentant schématiquement un tronçon de fuselage d'aéronef intégrant une structure de fuselage réalisée conformément à l'invention ;
La figure 2a est une vue en perspective d'une partie de la structure de fuselage selon l'invention comprenant un panneau de revêtement extérieur fixé à des lisses et relié à des cadres par des modules de fixation ;
La figure 2b est une vue en coupe transversale de la partie de fuselage représentée en figure 2a ;
Les figures 3a et 3b montrent différentes manières de réaliser les modules de fixation de la structure de fuselage selon l'invention ;
Les figures 4a, 4b et 4c montrent des modes de réalisation de l'invention mettant en évidence en particulier une zone de déformation privilégiée sur les modules de fixation.

### EXPOSÉ DÉTAILLÉ DE MODES DE RÉALISATION PARTICULIERS

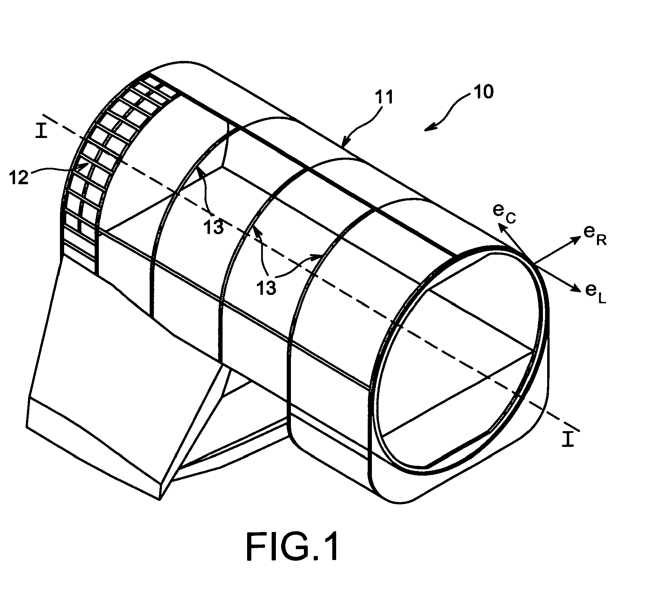

Comme l'illustre schématiquement la figure 1, le fuselage 10 d'un aéronef comprend une pluralité de panneaux 11 de revêtement extérieur fixés à une structure interne. Dans le mode de réalisation préféré de l'invention, les panneaux 11 sont réalisés en matériau composite comprenant un mélange de fibres et de résine. Le fuselage 10 peut être de forme et de dimensions variables selon le type d'aéronef, sans sortir du cadre de l'invention. La structure interne du fuselage 10 est formée principalement de lisses 12 et de cadres de structure 13. Les cadres de structure 13 sont régulièrement répartis sur toute la longueur du fuselage 10. Chacun d'entre eux est disposé selon une section transversale du fuselage 10, perpendiculairement à l'axe longitudinal I-I du fuselage, et présente globalement une forme circulaire sensiblement annulaire ou ovale, ou présentant deux ou trois lobes, ou encore tout autre forme du même type.

Dans toute la description qui va suivre, par convention, on utilise un repère orthogonal direct en coordonnées cylindriques (e_{L}, e_{R}, e_{C}) présenté dans la figure 1. On appelle e_{L} la direction longitudinale du fuselage qui coïncide avec l'axe longitudinal I-I correspondant sensiblement à l'axe de révolution du fuselage, e_{R} la direction radiale d'un point appartenant à un élément de la structure du fuselage et e_{C} la direction tangentielle ou circonférentielle en ce point.

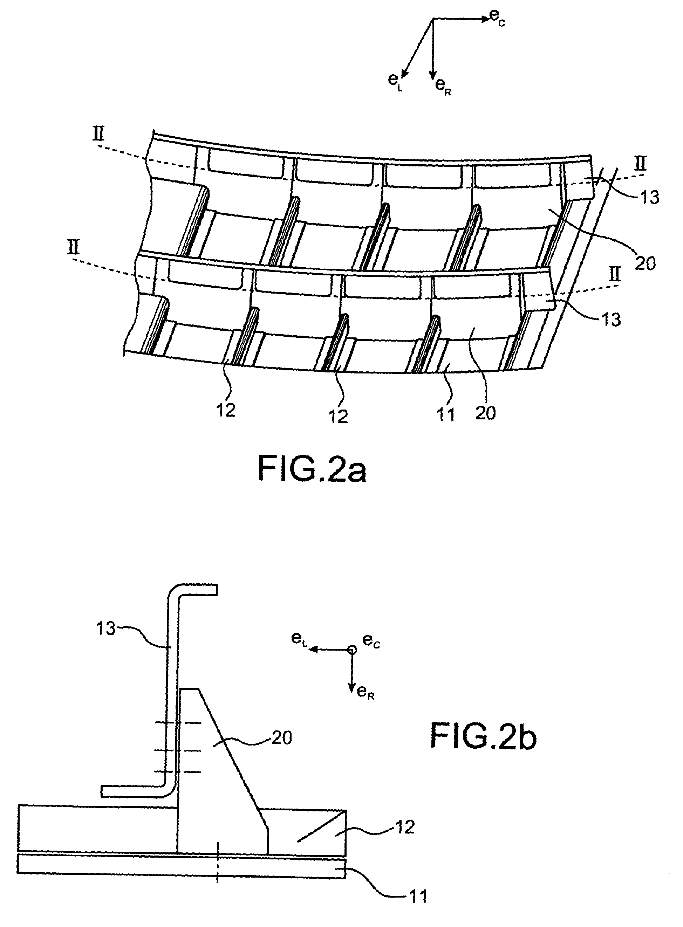

La figure 2a présente une partie de structure de fuselage 10 comprenant un panneau 11 de revêtement extérieur fixé à des lisses 12 et relié à des cadres 13 par des modules de fixation 20, ou clips, selon l'invention. Les lisses sont disposées suivant la direction longitudinale e_{L} et assurent le raidissement longitudinal du fuselage. Les cadres de structure sont disposés dans un plan sensiblement perpendiculaire à la direction longitudinale e_{L} et s'étendent suivant une direction circonférentielle II-II, de manière à assurer le raidissement circonférentiel du fuselage. La direction circonférentielle II-II est définie comme une ligne dont la direction e_{C} est la tangente en chacun de ses points. Les figures 2a et 2b présentent des lisses 12 de section transversale en T mais d'autres formes de section sont possibles comme par exemple en Z, en I, en J, en oméga ou encore toute forme de section trapézoïdale.

La figure 2b montre une coupe transversale de la partie de structure de fuselage 10 représentée sur la figure 2a. Un panneau 11 est fixé à au moins une lisse 12. Un clip 20 permet d'assembler le panneau 11 à un cadre de structure 13 situé radialement au-dessus de la lisse 12. Le cadre de structure représenté sur la figure 2b a une section de forme en Z mais d'autres formes de section sont possibles comme par exemple en J ou en C, ou encore toute autre forme du même type.

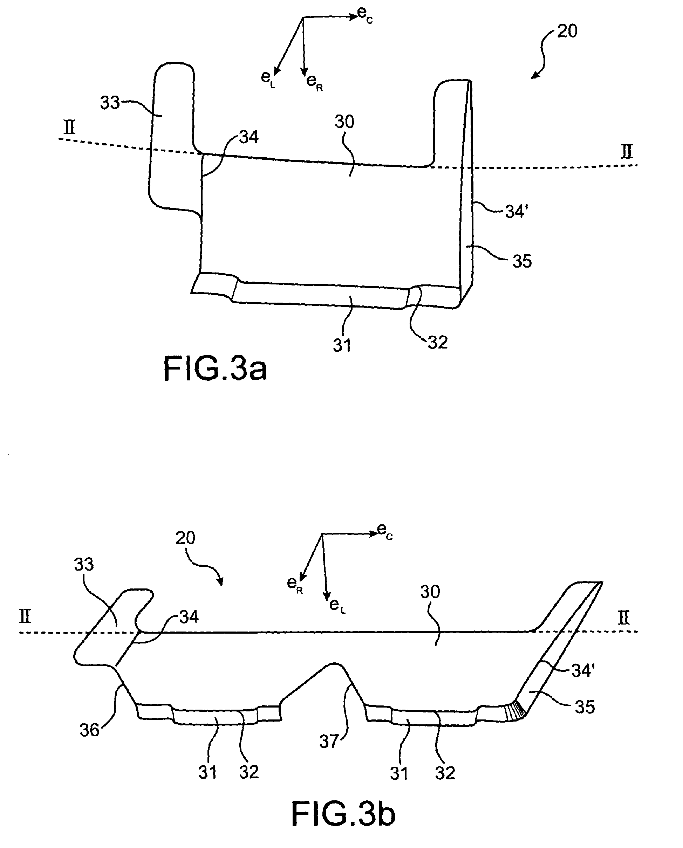

La figure 3a montre en détail un clip 20 selon une première alternative de réalisation de l'invention. Le clip 20 comprend une partie principale 30, sensiblement plane. La partie principale 30 s'inscrit dans un plan transversal à l'axe longitudinal I-I. De plus, la forme plane est sensiblement annulaire puisque la partie principale 30 suit la direction circonférentielle II-II. Une partie secondaire 31 est reliée à la partie principale 30 au niveau du bord circonférentiel extérieur 32 de la partie principale 30. Le terme « extérieur » est à comprendre dans le sens d'un éloignement radial de l'axe longitudinal I-I du fuselage. La partie secondaire 31 s'étend de manière sensiblement perpendiculaire à la partie principale 30. La partie principale 30 est particulièrement adaptée à être fixée au cadre de structure 13, par exemple par rivetage ou autre technique conventionnelle. La partie secondaire 31 est adaptée à être fixée, par exemple par rivetage ou autre technique conventionnelle, au panneau 11 de revêtement extérieur. Le clip 20 comprend une partie de jonction 33 située sur un bord latéral 34 de la partie principale 30 qui s'étend suivant l'axe circonférentiel II-II. Lors de la mise en place de la pluralité de clips 20 le long du cadre 13, c'est-à-dire dans la direction circonférentielle II-II, chaque partie de jonction 33 vient en contact avec une partie quelconque du clip 20 voisin, de manière à relier les clips 20 en série deux à deux. Le contact peut être réalisé par exemple par rivetage ou autre technique conventionnelle, ou encore par appui sous pression. Les clips 20 peuvent ainsi être rendus solidaires ou non les uns des autres.

Dans ce mode de réalisation, les clips 20 assurent une fonction structurale d'assemblage des panneaux 11 aux cadres de structures 13. Dans le but d'assurer une fonction supplémentaire de retour de courant électrique, les clips 20 sont réalisés dans un matériau de conductivité électrique sensiblement supérieure à celle des matériaux des panneaux 11 et des cadres de structure 13. Ainsi le réseau formé par la pluralité de clips 20 reliés en série par l'intermédiaire des parties de jonction 33, du fait de la conductivité électrique des clips 20 supérieure à celle des panneaux 11 et cadres 13, permet d'assurer la fonction électrique de retour de courant. Le matériau utilisé pour réaliser les clips 20 peut être tout matériau métallique, du fait de la conductivité électrique importante des métaux. Les connections en série des clips 20 forment des lignes de retour de courant sensiblement selon la direction circonférentielle. Les lignes de retour peuvent être connectées entre elles.

Un avantage supplémentaire concernant l'utilisation de clips 20 métalliques concerne leur bon comportement mécanique suivant le sens de sollicitation principal. Les clips 20 sont réalisés de préférence d'une seule pièce, à l'aide d'une tôle qui peut être emboutie puis pliée de manière à former une partie principale 30 et au moins une partie secondaire 31, 35. Les clips 20 sont alors sollicités principalement en dépliage, entre la partie principale 30 et la ou les partie(s) secondaire(s) 31, 35. Or les clips 20 métalliques présentent un comportement mécanique en dépliage supérieur au comportement mécanique de clips 20 en matériau composite, mélange de fibres et de résine. De plus, la fabrication des clips 20 en matériau métallique présente l'avantage de pouvoir être réalisée à des cadences élevées et à des coûts inférieurs à ceux de clips en matériau composite.

Les clips 20 peuvent également être réalisés en un matériau métallique comportant au moins une couche de fibres de renfort, comme par exemple le GLARE, ou en tout matériau du type *« fiber metal laminates ».* Ce dernier a l'avantage de présenter une conductivité électrique suffisante pour assurer un retour de courant ainsi qu'une résistance à la déformation élevée du fait de la présence des fibres de renfort.

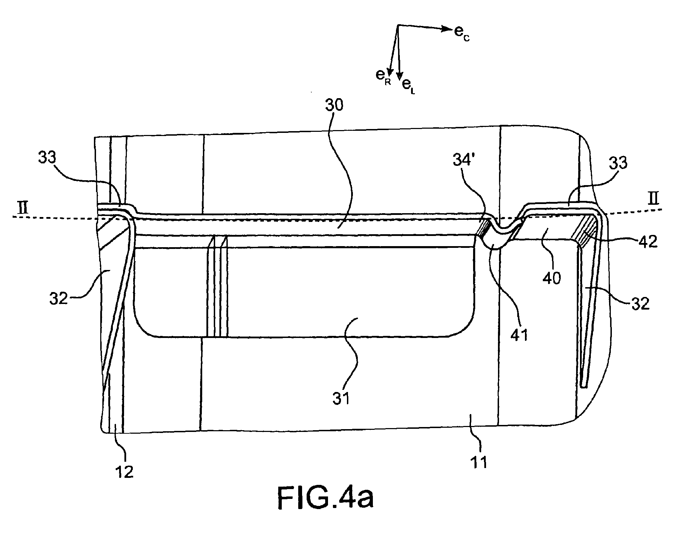

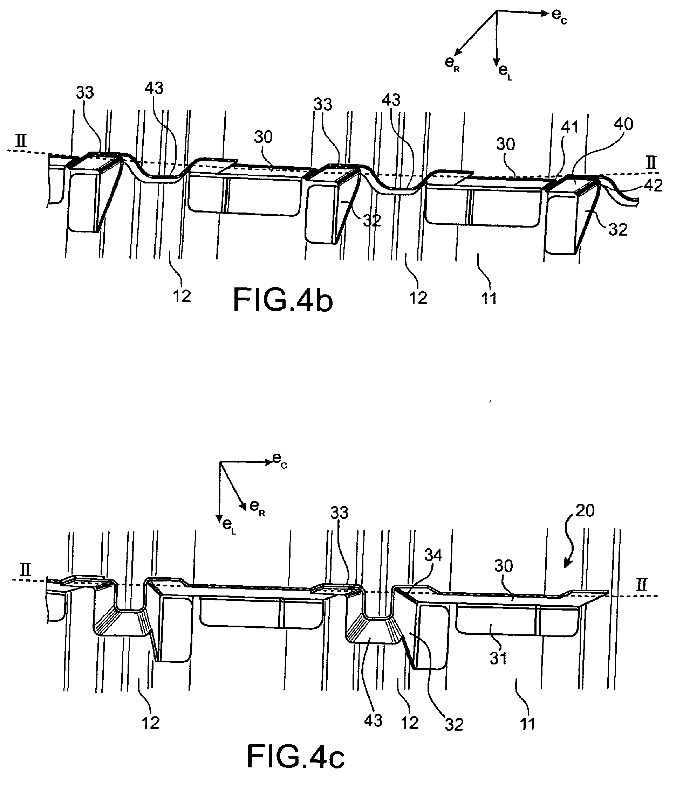

Dans le mode de réalisation de l'invention représenté dans la figure 3a, le clip 20 comprend une deuxième partie secondaire 35 s'étendant de manière sensiblement perpendiculaire à la partie principale 30 et à la partie secondaire 31, et disposée de manière sensiblement parallèle à une surface en regard d'une lisse 12. Les trois parties 30, 31, 35 forment ensemble un coin, comme un coin de malle. Cette deuxième partie secondaire 35, particulièrement adaptée à être fixée à la surface en regard de la lisse 12, est située sur un bord latéral 34' de la partie principale 30 opposé au bord latéral 34 portant la partie de jonction 33. Les deux bords latéraux 34, 34' sont situés de préférence aux extrémités de la partie principale 30 dans le sens de la circonférence. D'autres dispositions de la deuxième partie secondaire sont cependant possibles. Ainsi elle peut être située à un bord latéral 42 d'une partie de jonction 33, comme représenté dans la figure 4a. Elle peut également être située au bord latéral 34 où est également située la partie de jonction 33, comme représenté dans la figure 4c. Notons que chaque clip 20 peut bien entendu comporter plusieurs parties de jonction 33 ainsi que plusieurs deuxièmes parties secondaires 32.

La figure 3b présente un mode de réalisation de l'invention dans lequel une zone 36 du bord latéral 34 de la partie principale 30 est adaptée à la géométrie transversale d'une lisse 12 pour le passage de celle-ci. La zone 36 forme alors une demie encoche ouverte. Lors de la fixation des clips 20 sur les panneaux 11 et les cadres 13, le bord latéral 34 vient sensiblement en butée contre une surface en regard d'une lisse 13. La zone 36 du bord latéral 34 est prévue pour permettre le passage de la lisse 12 et diminuer toute distance qui séparerait la partie de jonction 33 du clip 20 considéré avec le clip voisin 20, du fait de la présence de la lisse 12. Dans ce mode de réalisation de l'invention, le bord circonférentiel extérieur 32 comprend également une zone 37 adaptée à la géométrie transversale d'une lisse 13, pour le passage de celle-ci. La zone 37 forme alors une encoche ouverte. Dans ce cas, le clip présente une longueur circonférentielle correspondant à deux distances inter-lisses. Cette zone 37 définit ainsi une zone de passage de la lisse 13 de manière perpendiculaire au clip 20. Plusieurs zones 37 peuvent être prévues le long du bord circonférentiel extérieur 32 selon la longueur circonférentielle du clip 20.

Les zones 36 et 37 ainsi que l'ensemble de la géométrie des clips sont donc adaptées à la forme des lisses considérées, mais peuvent également être adaptées à des spécificités locales, comme par exemple des bielles ou des traverses de planchers.

Les figures 4a, 4b et 4c présentent des modes de réalisation de l'invention dans lesquels la partie de jonction 33 comporte une zone de déformation privilégiée 43. Dans le cas où le clip 20 comporte deux parties de jonction 33, 40, chaque partie peut comporter une zone de déformation privilégiée, respectivement 43 et 41. La zone de déformation 41, 43 peut présenter diverses formes. La figure 4a montre une zone de déformation privilégiée 41 de la partie de jonction 40 de forme en arc de cercle qui présente une courbure constante et s'étend suivant la direction radiale e_{R}. Dans ce cas, le rayon de courbure étant faible, la zone de déformation 41 reste sensiblement contenue dans le plan médian de la partie principale 30 du clip 20. La figure 4b présente un clip 20 comportant deux parties de jonction 33 et 40 ayant chacune une zone de déformation privilégiée 43 et 41. La zone de déformation 41 présente un petit rayon de courbure, comme décrit précédemment. La zone de déformation 43 présente un grand rayon de courbure. Les deux zones de déformation peuvent être réalisées par la technique classique du soyage, ou par toute autre technique. La figure 4c présente un clip 20 dont la partie de jonction 33 comporte une zone de déformation privilégiée 43 en forme de U, c'est-à-dire dont la forme présente une succession de parties sensiblement planes et de parties courbes. Chaque partie courbe peut être réalisée par pliage de manière à obtenir une forme en U.

Ainsi, puisque les clips 20 présentent un coefficient de dilatation différent de ceux des panneaux 11 et des cadres 13, une variation de la température provoque une dilatation différente des clips 20 par rapport aux panneaux 11 et aux cadres 13. Les clips 20 s'étendent suivant l'axe circonférentiel II-II, aussi la dilatation circonférentielle des clips 20 peut induire des contraintes mécaniques aux cadres 13 et aux panneaux 11, ce qui revient à fragiliser la structure de fuselage 10. La zone de déformation privilégiée 41, 43 de la partie de jonction 33, 40 est prévue pour se déformer lors d'un différentiel de dilatation. Ainsi, l'énergie créée par la dilatation différentielle des clips 20 est transmise dans les zones de déformation privilégiée 41, 43 et ne génère pas de contraintes mécaniques défavorables pour la structure de fuselage 10.

Les zones de déformation privilégiée 43, 41 décrites précédemment sont réalisées par soyage ou pliage, mais d'autres formes peuvent également convenir, comme par exemple des zones de type tôle à doigt ou de type fente réalisée suivant la direction radiale e_{R}.

Un avantage supplémentaire de la présence d'une partie de jonction 33, 40 comprenant ou non une zone de déformation privilégiée 43, 41 réside dans la grande tolérance de positionnement des clips 20 lors de leur mise en place dans la structure de fuselage 10.

## Revendications

1. Structure de fuselage (10) pour fuselage d'aéronef en matériau composite comprenant :
- au moins un cadre de structure (13) réalisé dans un premier matériau,
- au moins un panneau (11) de revêtement extérieur en matériau composite,
- une pluralité de modules de fixation (20) répartis le long de la circonférence dudit cadre de structure (13), lesdits modules de fixation (20) permettant la fixation dudit au moins un panneau (11) sur ledit cadre (13),
**caractérisée en ce que** lesdits modules de fixation (20) sont réalisés dans un second matériau présentant une conductivité électrique sensiblement supérieure à celles dudit matériau composite et du premier matériau, lesdits modules de fixation (20) étant montés en contact les uns aux autres de sorte à être reliés en série.

2. Structure de fuselage (10) pour fuselage d'aéronef en matériau composite selon la revendication 1, **caractérisée en ce que** le second matériau est un matériau métallique.

3. Structure de fuselage (10) pour fuselage d'aéronef en matériau composite selon l'une des revendications 1 à 2, **caractérisée en ce que** le second matériau est un matériau métallique auquel est adjointe une couche de fibres.

4. Structure de fuselage (10) pour fuselage d'aéronef en matériau composite selon l'une des revendications 1 à 3, **caractérisée en ce que** lesdits modules de fixation (20) comprennent chacun une partie principale (30) sensiblement plane s'étendant suivant la direction circonférentielle (II-II) du fuselage (10), une partie secondaire (31) située sur un bord circonférentiel extérieur (32) de la partie principale (30) et s'étendant de manière sensiblement perpendiculaire à la partie principale (30), et au moins une partie de jonction (33, 40) située sur un bord latéral (34, 34') de la partie principale (30) et s'étendant suivant la direction circonférentielle (II-II) du fuselage (10) de manière à relier en série ladite pluralité de modules de fixation (20) deux à deux.

5. Structure de fuselage (10) pour fuselage d'aéronef en matériau composite selon la revendication 4, **caractérisée en ce qu'**une zone (41, 43) de la partie de jonction (33, 40) de chaque module de fixation (10) est une zone de déformation privilégiée.

6. Structure de fuselage (10) pour fuselage d'aéronef en matériau composite selon l'une des revendications 4 à 5, **caractérisée en ce qu'**elle comprend au moins une lisse (12) à laquelle est fixé le revêtement extérieur et disposée suivant la direction longitudinale (I-I) du fuselage (10), et **en ce qu'**une zone (36) d'au moins un bord latéral (34, 34') de la partie principale (30) de chaque module de fixation (20) présente une forme adaptée à laisser passer ladite lisse (12).

7. Structure de fuselage (10) pour fuselage d'aéronef en matériau composite selon l'une des revendications 4 à 6, **caractérisée en ce qu'**elle comprend au moins une lisse (12) à laquelle est fixé le revêtement extérieur et disposée suivant la direction longitudinale (I-I) du fuselage (10), et **en ce qu'**au moins une zone (37) du bord circonférentiel extérieur (32) de la partie principale (30) de chaque module de fixation (20) présente une forme adaptée à laisser passer ladite lisse (12).

8. Structure de fuselage (10) pour fuselage d'aéronef en matériau composite selon l'une des revendications 4 à 7, **caractérisée en ce qu'**elle comprend au moins une lisse (12) à laquelle est fixé le revêtement extérieur et disposée suivant la direction longitudinale (I-I) du fuselage (10), et **en ce que** chaque module de fixation (20) comprend au moins une deuxième partie secondaire (35) s'étendant de manière sensiblement perpendiculaire à la partie principale (30) et disposée de manière à être sensiblement parallèle à une surface en regard de ladite lisse (12).

9. Structure de fuselage (10) pour fuselage d'aéronef en matériau composite selon la revendication 6, **caractérisée en ce qu'**une deuxième partie secondaire (35) est reliée à un bord latéral (34, 34') de la partie principale (30).

10. Aéronef comprenant une structure de fuselage (10) selon l'une quelconque des revendications précédentes.

## Claims

1. A fuselage structure (10) for an aircraft fuselage in composite material comprising:
- at least one structure frame (13) made in a first material,
- at least one outer skin panel (11) in composite material,
- a plurality of attachment modules (20) distributed along the circumference of said structure frame (13), said attachment modules (20) allowing attachment of said at least one panel (11) on said frame (13),
**characterized in that** said attachment modules (20) are made in a second material having a substantially greater electric conductivity than those of said composite material and of the first material, said attachment modules (20) being mounted in contact with each other so as to be connected in series.

2. The fuselage structure (10) for an aircraft fuselage in composite material according to claim 1, **characterized in that** the second material is a metal material.

3. The fuselage structure (10) for an aircraft fuselage in composite material according to any of claims 1 to 2, **characterized in that** the second material is a metal material to which is affixed a layer of fibers.

4. The fuselage structure (10) for an aircraft fuselage in composite material according to any of claims 1 to 3, **characterized in that** said attachment modules (20) each comprise a substantially plane main portion (30) extending along the circumferential direction (II-II) of the fuselage (10), a secondary portion (31) located on an outer circumferential edge (32) of the main portion (30) and extending substantially perpendicularly to the main portion (30), and at least one junction portion (33, 40) located on a side edge (34, 34') of the main portion (30) and extending along the circumferential direction (II-II) of the fuselage (10) so as to connect in series said plurality of attachment modules (20) pairwise.

5. The fuselage structure (10) for an aircraft fuselage in composite material according to claim 4, **characterized in that** an area (41, 43) of the junction portion (33, 40) of each attachment module (10) is a preferential deformation area.

6. The fuselage structure (10) for an aircraft fuselage in composite material according to any of claims 4 to 5, **characterized in that** it comprises at least one stringer (12) to which is attached the outer skin, and positioned along the longitudinal direction (I-I) of the fuselage (10), and **in that** an area (36) of at least one side edge (34, 34') of the main portion (30) of each attachment module (20) has an adapted shape for letting through said stringer (12).

7. The fuselage structure (10) for an aircraft fuselage in composite material according to any of claims 4 to 6, **characterized in that** it comprises at least one stringer (12) to which the outer skin is attached, and positioned along the longitudinal direction (I-I) of the fuselage (10), and **in that** at least one area (37) of the outer circumferential edge (32) of the main portion (30) of each attachment module (20) has an adapted shape for letting through said stringer (12).

8. The fuselage structure (10) for an aircraft fuselage in composite material according to any of claims 4 to 7, **characterized in that** it comprises at least one stringer (12) to which the outer skin is attached, and positioned along the longitudinal direction (I-I) of the fuselage (10), and **in that** each attachment module (20) comprises at least one second secondary portion (35) extending substantially perpendicularly to the main portion (30) and positioned so as to be substantially parallel to a surface facing said stringer (12).

9. The fuselage structure (10) for an aircraft fuselage in composite material according to claim 6, **characterized in that** a second secondary portion (35) is connected to a side edge (34, 34') of the main portion (30).

10. An aircraft comprising a fuselage structure (10) according to any of the preceding claims.

## Patentansprüche

1. Rumpfstruktur (10) für Flugzeugrumpf aus Verbundmaterial, umfassend:
- wenigstens einen Struktur-Rahmen (13) aus einem ersten Material,
- wenigstens eine Außenverkleidungsplatte (11) aus Verbundmaterial,
- eine Vielzahl von Befestigungsmodulen (20), verteilt längs des Umfangs des genannten Strukturrahmens (13), wobei die genannten Befestigungsmodule (20) die Befestigung der genannten wenigstens einen Platte (11) auf dem genannten Rahmen (13) ermöglichen,
**dadurch gekennzeichnet, dass** die genannten Befestigungsmodule (20) aus einem zweiten Material sind, dessen elektrische Leitfähigkeit wesentlich höher ist als die des genannten Verbundmaterials und des ersten Materials, wobei die Befestigungsmodule (20) so montiert sind, dass sie, in Serie verbunden, miteinander Kontakt haben.

2. Rumpfstruktur (10) für Flugzeugrumpf aus Verbundmaterial nach Anspruch 1, **dadurch gekennzeichnet, dass** das zweite Material ein metallisches Material ist.

3. Rumpfstruktur (10) für Flugzeugrumpf aus Verbundmaterial nach einem der Ansprüche 1 und 2, **dadurch gekennzeichnet, dass** das zweite Material ein metallisches Material ist, dem eine Faserschicht beigefügt ist.

4. Rumpfstruktur (10) für Flugzeugrumpf aus Verbundmaterial nach einem der Ansprüche 1 bis 3, **dadurch gekennzeichnet, dass** jeder der genannten Befestigungsmodule (20) umfasst:
einen sich im Wesentlichen gemäß der Umfangsrichtung (II-II) des Rumpfs (10) erstreckenden ebenen Hauptteil (30), einen auf einem Außenumfangsrand (32) des Hauptteils (30) befindlichen und sich im Wesentlichen senkrecht zu dem Hauptteil (30) erstreckenden Nebenteil (31 ), und
wenigstens einen Verbindungsteil (33, 40), der sich auf einem Seitenrand (34, 34') des Hauptteils (30) befindet und sich gemäß der Umfangsrichtung (II-II) des Rumpfs (10) derartig erstreckt, dass er die genannte Vielzahl von Befestigungsmodulen (20) paarweise in Serie verbindet.

5. Rumpfstruktur (10) für Flugzeugrumpf aus Verbundmaterial nach Anspruch 4, **dadurch gekennzeichnet, dass** eine Zone (41, 43) des Verbindungsteils (33, 40) jedes Befestigungsmoduls (10) eine die Verformung begünstigende Zone ist.

6. Rumpfstruktur (10) für Flugzeugrumpf aus Verbundmaterial nach einem der Ansprüche 4 bis 5, **dadurch gekennzeichnet, dass** sie wenigstens einen Holm (12) umfasst, auf dem die Außenverkleidung befestigt und entsprechend der Längsrichtung (I-I) des Rumpfs (10) angeordnet ist, und **dadurch**, dass die Zone (36) wenigstens eines Seitenrands (34, 34') des Hauptteils (30) jedes Befestigungsmoduls (20) eine so angepasste Form aufweist, dass sie den genannten Holm (12) durchlässt.

7. Rumpfstruktur (10) für Flugzeugrumpf aus Verbundmaterial nach einem der Ansprüche 4 bis 6, **dadurch gekennzeichnet, dass** sie wenigstens einen Holm (12) umfasst, auf dem die Außenverkleidung befestigt und entsprechend der Längsrichtung (I-I) des Rumpfs (10) angeordnet ist, und **dadurch**, dass wenigstens eine Zone (37) des Außenumfangsrands (32) des Hauptteils (30) jedes Befestigungsmoduls (20) eine so angepasste Form aufweist, dass sie den genannten Holm (12) durchlässt.

8. Rumpfstruktur (10) für Flugzeugrumpf aus Verbundmaterial nach einem der Ansprüche 4 bis 7, **dadurch gekennzeichnet, dass** sie wenigstens einen Holm (12) umfasst, auf dem die Außenverkleidung befestigt und entsprechend der Längsrichtung (I-I) des Rumpfs (10) angeordnet ist, und **dadurch**, dass jeder Befestigungsmodul (20) wenigstens einen zweiten Nebenteil (35) umfasst, der sich im Wesentlichen senkrecht zu dem Hauptteil (30) erstreckt und so angeordnet ist, dass er im Wesentlichen parallel ist zu einer dem genannten Holm (12) gegenüberstehenden Fläche.

9. Rumpfstruktur (10) für Flugzeugrumpf aus Verbundmaterial nach Anspruch 6, **dadurch gekennzeichnet, dass** ein zweiter Nebenteil (35) mit einem Seitenrand (34, 34') des Hauptteils (30) verbunden ist.

10. Flugzeug mit einer Flugzeugrumpfstruktur (10) nach einem der vorhergehenden Ansprüche.
